# DEMANDE DE BREVET EUROPEEN

(11) **EP 2 765 121 A1**
(43) Date de publication de la demande: **13.08.2014**
(21) Numéro de dépôt: 13176532.3
(22) Date de dépôt: 15.07.2013
(51) Int. Cl.: C04B 35/10, C04B 35/48, C04B 35/56, C04B 35/632, C04B 35/634, B22F 3/22, C04B 35/584, C04B 26/06

(54) **Liant pour composition de moulage par injection**

(71) Demandeur: Comadur S.A., 2400 Le Locle (CH)
(72) Inventeur: Cartier, Damien, 25000 Besançon (FR)
(74) Mandataire: Ravenel, Thierry Gérard Louis

(57) **Abrégé**

L'invention concerne un liant pour composition de moulage par injection comprenant :
- de 35 à 54% vol. d'une base polymérique,
- de 40 à 55 % vol. d'un mélange de cires,
- et environ 10% vol. d'un surfactant,

dans lequel la base polymérique contient des copolymères d'éthylène et d'acide méthacrylique ou acrylique, ou des copolymères d'éthylène et d'acétate de vinyle, ou des copolymères d'éthylène comprenant un anhydride maléique ou un mélange de ces copolymères, ainsi que du polyéthylène, du polypropylène et une résine acrylique.

## Description

L'invention concerne une composition de liant pour moulage par injection ainsi qu'une composition de moulage par injection (feedstock) destinée à la fabrication de pièces de forme métalliques ou céramiques

Dans la fabrication de matériaux durs pour la bijouterie et l'industrie horlogère, ou encore pour des applications techniques telles que le médical, l'électronique, la téléphonie, l'outillage, les plaquettes de coupe d'usinage, l'industrie des biens de consommation, et notamment en ce qui concerne des matériaux durs généralement désignés sous le nom générique de « céramiques » inorganiques, on met en oeuvre des techniques de métallurgie des poudres. On appellera ici « céramique » le matériau de synthèse inorganique obtenu, quelle que soit la nature de ce matériau, saphir, rubis, diamant artificiel, glace saphir, céramique, micro-aimant, métal, alliage, ou autre.

Les matières premières de base sont de différente nature, de façon générale, et comportent au moins d'une part de la poudre de céramique et d'autre part des liants organiques, tels que résines ou matières plastiques ou similaires qui permettent l'injection et la bonne tenue du composant réalisé avec le mélange de l'ensemble des matières premières. D'autres additifs peuvent être incorporés au mélange. Ces matières premières peuvent également être de différentes textures: solide, pulvérulente, liquide, ou encore pâteuse. Le mélange peut en outre changer de structure au cours de son élaboration, en particulier, et non limitativement, quand des composants complémentaires d'une résine subissent une réaction de polymérisation.

Le procédé global de fabrication d'un composant céramique inorganique comporte au moins les étapes suivantes :
- préparation des matières premières ;
- mélange(s) des matières premières, ou/et pré-mélange deux à deux (ou plus) si nécessaire ;
- malaxage d'homogénéisation ;
- granulation ;
- pressage, notamment dans une chambre de moulage, d'une quantité de poudre ou de granulés feedstock issue du malaxage et de la granulation, pour la réalisation d'une ébauche de composant. Ce pressage peut être réalisé par injection, sous pression, notamment dans un injecteur à vis comportant des moyens de mise en température de cette quantité de poudre ou de granulés feedstock issue du malaxage et de la granulation;
- étuvage de déliantage pour la combustion ou/et la dissolution de certains composants du mélange ;
- traitement thermique de l'ébauche en sortie de déliantage, pour le frittage donnant sa cohérence finale au composant fini. Ce traitement thermique entraîne un retrait dimensionnel, qui permet l'obtention d'un composant en cotes finies ;
- traitement de finition d'aspect du composant.

L'invention vise plus particulièrement à proposer un liant pour composition de moulage par injection optimisé facilitant le malaxage en métallurgie des poudres pour l'obtention de céramiques ou de métaux, de façon à obtenir une production de qualité très reproductible, avec un coefficient de retrait maîtrisé.

On connaît déjà, par exemple le brevet US 5145900, des matériaux thermoplastiques (feedstock) pour la fabrication de pièces moulées céramiques qui contiennent une poudre inorganique frittable et un liant organique polymérique, celui-ci étant essentiellement constitué d'un mélange de polyoxyméthylène et de copolymères de polyoxyméthylène et de polyoxolanes.

Ces feedstocks ont révélé toutefois de nombreux inconvénients, comme par exemple une fluidité insuffisante en moulage par injection, et des problèmes de tenue des pièces de formes moulées qui présentent des fissures et du feuilletage, ceci surtout lorsque la forme des pièces est complexe; ils sont en outre responsables de problèmes environnementaux dus à la nécessité d'utiliser des produits agressifs, tels que l'acide nitrique, plus particulièrement pour l'élimination finale de la phase organique. De plus, l'utilisation d'eau dans ce processus d'élimination du liant organique est problématique dans le cas où les feedstocks contiennent des matériaux métalliques qui risquent d'être oxydés.

En conséquence, le but de la présente invention consiste à fournir un liant pour composition de moulage qui obvie aux inconvénients susmentionnés, et plus particulièrement qui vise à améliorer l'homogénéité et la fluidité du feedstock pour permettre la fabrication de pièces métalliques ou céramiques de formes plus complexes, de réduire les temps de cycle en production, d'augmenter la résistance mécanique des corps verts et déliantés aux contraintes de production (manipulation et diverses opérations de reprise), et enfin qui supprime la nécessité d'utiliser des produits agressifs pour l'environnement pour l'élimination du liant organique, en remplaçant ceux-ci par des solvants non polluants pouvant être éliminés par simple traitement thermique.

A cet effet, l'invention a pour objet un liant pour composition de moulage par injection comprenant :
- de 35 à 54 % vol. D'une base polymérique,
- de 40 à 55 % vol. D'un mélange de cires,
- et environ 10% vol. D'un surfactant,
dans lequel la base polymérique contient des copolymères d'éthylène et d'acide méthacrylique ou acrylique, ou des copolymères d'éthylène et d'acétate de vinyle, ou des copolymères d'éthylène comprenant un anhydride maléique ou un mélange de ces copolymères, ainsi que du polyéthylène, du polypropylène et une résine acrylique.

De préférence, le liant de l'invention comprend de 2 à 7 % vol. d'un desdits copolymères ou de leurs mélanges, environ 25 % vol. de polyéthylène, de 2 à 15 % vol. de polypropylène et de 6 à 15% vol. de résine acrylique.

Selon un mode de réalisation préféré, le copolymère d'éthylène et d'acide méthacrylique ou acrylique contient de 3 à 10 % pds. de comonomère méthacrylique ou acrylique, le copolymère d'éthylène et d'acétate de vinyle contient de 7 à 18 % pds. de comonomère acétate de vinyle, et le copolymère d'éthylène et d'anhydride est un copolymère statistique (*random*) d'éthylène et d'anhydride maléique ayant un point de fusion de 100 à 110 °C ou un copolymère de polyéthylène HD et d'un anhydride modifié ayant une point de fusion de 130 à 134°C.

De préférence, la résine acrylique présente un poids moléculaire compris entre 50000 et 220000 et une viscosité de 0,21 à 0,83, et est choisie parmi le groupe comprenant les polymères méthacrylate d'isobutyle, de méthyle, d'éthyle et de N-butyle, et les copolymères méthacrylates d'isobutyle et de N-butyle et méthacrylates de méthyle et de N-butyle ou un mélanges de ces polymères et/ou copolymères.

De manière avantageuse, la cire est une cire de Carnauba ou une cire de paraffine, ou une huile de palme, ou un mélange de ces éléments.

Selon une autre caractéristique préférée, le surfactant est un NN'-éthylène-bis(stéaramide) ou un mélange d'acides stéarique et palmitique (stéarine), ou un mélange de ces éléments.

L'invention a également pour objet une composition de moulage par injection (feedstock) destinée à la fabrication de pièces de forme métalliques ou céramiques comprenant 76 à 96 % pds. d'une poudre inorganique et 4 à 24 % pds. de liant comprenant :
- de 35 à 54% vol. d'une base polymérique,
- de 40 à 55 % vol. d'un mélange de cires,
- et environ 10% vol. d'un surfactant,
dans lequel la base polymérique contient des copolymères d'éthylène et d'acide méthacrylique ou acrylique, ou des copolymères d'éthylène et d'acétate de vinyle, ou des copolymères d'éthylène comprenant un anhydride maléique ou un mélange de ces copolymères, ainsi que du polyéthylène, du polypropylène et une résine acrylique.

Selon une caractéristique particulière, la poudre inorganique de la composition de moulage par injection peut être choisie parmi l'ensemble comprenant une poudre d'oxyde, de nitrure, de carbure, de métal, ou un mélange de ces dites poudres et de préférence la poudre inorganique est choisie parmi l'ensemble comprenant une poudre d'alumine, une poudre d'oxyde de zirconium, une poudre de carbure de chrome, une poudre de carbure de titane ou une poudre de carbure de tungstène, une poudre de tungstène métallique ou de nitrure de silicium, une poudre d'acier inoxydable, une poudre de titane métallique ou une mélanges de ces poudres.

Selon des modes de réalisation préférés de la composition de moulage par injection , cette dernière contient en % poids :
- 76 à 88 % d'alumine et 12 à 24% de liant selon l'invention tel que défini plus haut, ou
- 76 à 88% d'alumine et 0.1 à 0.6% d'oxyde de magnésium et 12 à 24% de liant de l'invention, ou
- 58 à 86.5 % d'oxyde zirconium et 3.9 à 4.6% d'oxyde d'yttrium et 0.18 à 18.5% d'alumine et 9 à 22% de liant de l'invention, ou

- 61.5 à 84% d'oxyde de zirconium et 3.9 à 4.6% d'oxyde d'yttrium et 0.2 à 9% d'alumine et 2 à 5.5% de pigments inorganique d'une liste comprenant de l'oxyde de fer, de l'oxyde de cobalt, de l'oxyde de chrome, de l'oxyde de titane, de l'oxyde de manganèse, de l'oxyde de zinc ou d'un mélange des dits oxydes et de 9 à 22% de liant de l'invention, ou
- de 88 à 91 % de carbure de chrome ou de titane, et de 9 à 12% de liant de l'invention, ou
- de 93 à 96 % de carbure de tungstène ou de tungstène métallique et de 4 à 7% de liant de l'invention, ou
- de 78 à 85% de nitrure de silicium et de 15 à 22% de liant de l'invention.

La présente invention sera maintenant illustrée plus en détails par les exemples non limitatifs qui suivent.

### Exemple 1

On mélange la partie polymérique du liant à une poudre d'oxyde zirconium noir (de type St. Gobain Zir Black) à une température d'environ 150°C pour former un prémix. A ce prémix sont ajoutés les cires et le surfactant, et la température est à nouveau augmentée jusqu'à environ 180 °C pour former une sorte de pâte homogène, laquelle est alors refroidie puis granulée jusqu'à solidification, puis conservée pour constituer le feedstock utilisable dans la fabrication d'une pièce de forme par injection selon une technique connue.

Dans cet exemple, on a utilisé plus particulièrement 17,2 kg de la poudre de zircone (86 % pds.) et 2,8 kg du liant (env. 14% pds) ayant la composition volumique suivante:
- 24 % de polyéthylène HD
- 10 % de polypropylène
- 4 % de copolymère d'éthylène et d'acide méthacrylique (à 6,5 % pds. d'acide méthacrylique, par exemple du type "Nucrel (TM)" de DuPont)
- 10 % d'une résine polymère méthacrylate d'iso-butyle ayant un poids moléculaire de 195'000 (par exemple du type "Elvacite (TM) 2045" de Lucite International)
- 1 % d'une résine copolymère méthacrylate d'isobutyle et N-butyle ayant un poids moléculaire de 165'000 (par exemple du type "Elvacite (TM) 2046" de Lucite International)
- 11 % de cire Carnauba
- 31 % d'une cire de paraffine (par exemple du type "Carisma 54 T (TM)" de Alpha Wax BV)
- 6% de bis-stéaramide de N, N'-éthylène
- 3 % d'un mélange d'acides stéarique et palmitique (par exemple du type Stéarine Dubois).

### Exemple 2

Le même type de feedstock que dans l'Exemple 1 ci-dessus est préparé en remplaçant l'oxyde de zirconium noir par de l'oxyde de zirconium blanc, et en utilisant des valeurs légèrement différentes des divers composants du liant, plus particulièrement:
- 26 % du polyéthylène HD
- 10% de polypropylène
- 4% de copolymère d'éthylène et d'acide méthacrylique
- 11 % de la résine "Elvacite 2045"
- 1 % de résine "Elvacite 2046"
- 11% de cire de Carnauba
- 29 % de la cire de paraffine
- 8 % de la bis-stéaramide de N, N'-éthylène

### Exemple 3

Toujours avec les mêmes composants du liant organique, avec des proportions volumiques légèrement différentes, d'autres feedstocks peuvent être préparés avec divers poudres céramiques ou métalliques, plus particulièrement de l'alumine, avec indice de retrait de 1,19 ou 1,30 (translucide), du carbure de chrome ou du carbure de titane, du carbure de tungstène (de différentes qualités) et du tungstène métallique, selon le Tableau suivant.

| Liant (% vol.) | Al₂O₃ | Al₂O₃ (transl.) | CrC (90% pds) | CW | W |
|---|---|---|---|---|---|
| | (85-6% pds) | (78-9% pds) | TiC (89% pds) | (94-94,5% pds) | (94-5% pds) |
| Polyéthylène HD | 26 | 28 | 24 | 25/25 | 26/25 |
| Polypropylène | 6 | 2 | 6 | 8/8 | 10/10 |
| Copolymère ("Nucrel") | 3,5 | 3 | 3 | 4/4 | 4/4 |
| Résine "Elvacite 2045" | 6 | 5 | 5 | 7/7 | 9/7 |
| Résine "Elvacite 2046" | 1 | 1 | 1 | 1/1 | 1/1 |
| Cire de Carnauba | 12 | 12 | 12 | 11/11 | 11/11 |
| Cire de paraffine | 35 | 39 | 39 | 34/37 | 29/32 |
| Bix-stéréamide de NN'-éthylène | 5,5 | 5 | 5 | 5/5 | 5/5 |
| Stéarine (Dubois) | 5 | 5 | 5 | 5/2 | 5/5 |

## Revendications

1. Liant pour composition de moulage par injection comprenant :
- de 35 à 54% vol. d'une base polymérique,
- de 40 à 55 % vol. d'un mélange de cires,
- et environ 10% vol. d'un surfactant,
dans lequel la base polymérique contient des copolymères d'éthylène et d'acide méthacrylique ou acrylique, ou des copolymères d'éthylène et d'acétate de vinyle, ou des copolymères d'éthylène comprenant un anhydride maléique ou un mélange de ces copolymères, ainsi que du polyéthylène, du polypropylène et une résine acrylique.

2. Liant selon la revendication 1 comprenant de 2 à 7 % vol. d'un desdits copolymères ou de leurs mélanges, environ 25 % vol. de polyéthylène, de 2 à 15 % vol. de polypropylène et de 6 à 15% vol. de résine acrylique.

3. Liant selon la revendication 1 ou la revendication 2, dans lequel le copolymère d'éthylène et d'acide méthacrylique ou acrylique contient de 3 à 10 % pds. de comonomère méthacrylique ou acrylique, le copolymère d'éthylène et d'acétate de vinyle contient de 7 à 18 % pds. de comonomère acétate de vinyle, et le copolymère d'éthylène et d'anhydride est un copolymère statistique (*random*) d'éthylène et d'anhydride maléique ayant un point de fusion de 100 à 110°C ou un copolymère de polyéthylène HD et d'un anhydride modifié ayant une point de fusion de 130 à 134°C.

4. Liant selon l'une des revendications précédentes, dans lequel la résine acrylique présente un poids moléculaire compris entre 50000 et 220000 et une viscosité de 0,21 à 0,83, et est choisie parmi le groupe comprenant les polymères méthacrylate d'isobutyle, de méthyle, d'éthyle et de N-butyle, et les copolymères méthacrylates d'isobutyle et de N-butyle et méthacrylates de méthyle et de N-butyle ou un mélanges de ces polymères et/ou copolymères.

5. Liant selon l'une des revendications précédentes, dans lequel la cire est une cire de Carnauba ou une cire de paraffine ou une huile de palme ou un mélanges de ces éléments.

6. Liant selon l'une des revendications précédentes, dans lequel le surfactant est un NN'-éthylène-bis(stéaramide), ou un mélange d'acides stéarique et palmitique (stéarine), ou un mélange de ces éléments.

7. Composition de moulage par injection (feedstock) destinée à la fabrication de pièces de forme métalliques ou céramiques comprenant 76 à 96% pds. d'une poudre inorganique et 4 à 24% pds. du liant selon l'une des revendications 1 à 6.

8. Composition de moulage selon la revendication 7, dans laquelle la poudre inorganique est choisie parmi l'ensemble comprenant une poudre d'oxyde, de nitrure, de carbure, de métal, ou un mélange de celles-ci.

9. Composition de moulage selon la revendication 8, dans laquelle la poudre inorganique est choisie parmi l'ensemble comprenant une poudre d'alumine, une poudre d'oxyde de zirconium, une poudre de carbure de chrome, une poudre de carbure de titane ou une poudre de carbure de tungstène, une poudre de tungstène métallique ou de nitrure de silicium, une poudre d'acier inoxydable, une poudre de titane métallique, ou un mélange de ces poudres .

10. Composition de moulage selon la revendication 8 ou 9, qui contient en % poids :
• 76 à 88 % d'alumine et 12 à 24% de liant,
• 76 à 88% d'alumine et 0.1 à 0.6% d'oxyde de magnésium et 12 à 24% de liant,
• 58 à 86.5% d'oxyde zirconium et 3.9 à 4.6% d'oxyde d'yttrium et 0.18 à 18.5% d'alumine et 9 à 22% de liant,
• 61.5 à 84% d'oxyde de zirconium et 3.9 à 4.6% d'oxyde d'Yttrium et 0.2 à 9% d'alumine et 2 à 5.5% de pigments inorganique d'une liste comprenant de l'oxyde de fer, de l'oxyde de cobalt, de l'oxyde de chrome, de l'oxyde de titane, de l'oxyde de manganèse, de l'oxyde de zinc ou d'un mélange des dits oxydes et de 9 à 22% de liant,
• de 88 à 91% de carbure de chrome ou de titane et de 9 à 12% de liant,
• de 93 à 96% de carbure de tungstène ou de tungstène métallique et de 4 à 7% de liant, ou
• de 78 à 85% de Nitrure de silicium et de 15 à 22% de liant
